# EUROPÄISCHE PATENTSCHRIFT

(11) **EP 0 551 640 B1**
(45) Veröffentlichungstag und Bekanntmachung des Hinweises auf die Patenterteilung: **26.07.1995**
(21) Anmeldenummer: 92121755.0
(22) Anmeldetag: 22.12.1992
(51) Int. Cl.: F16L 59/02, E04B 1/76, B32B 5/22, E04F 13/08

(54) **Gebäudewandverkleidung**
Covering for a building's walls
Revêtement pour mur de bâtiment

(30) Priorität: 04.01.1992 DE 4200125
(43) Veröffentlichungstag der Anmeldung: 21.07.1993
(73) Patentinhaber: Heinemann, Herbert, D-75181 Pforzheim (DE)
(72) Erfinder: Heinemann, Herbert, D-75181 Pforzheim (DE)
(74) Vertreter: Abel, Martin, Dipl.-Ing.

(56) Entgegenhaltungen:
- DE-U- 8 800 437
- FR-A- 1 333 074
- US-A- 3 157 204
- US-A- 4 104 840
- US-A- 4 122 203

## Beschreibung

Die Erfindung betrifft ein vorgefertigtes plattenartiges Formteil mit wärmedämmenden Eigenschaften zum Verkleiden einer Gebäudewand-Außenseite gemäß Oberbegriff des Anspruchs 1. Ein solches Formteil ist beispielsweise aus der US-A-4104840 bekannt.

Um ein Gebäude wärmemässig zu isolieren, kann es mit wärmedämmenden Formteilen verkleidet werden. Dabei ist beispielsweise die Verwendung von Polystyrolplatten üblich, die man an die betreffende Gebäudewand anklebt. Selbstverständlich kommen auch andere Materialien in Frage, so z.B. Polyurethan, Kork oder Holz.

Bei einer Gebäudewandverkleidung sollte darauf geachtet werden, daß keine Luftzwischenräume entstehen, in denen Aussenluft zirkulieren und Kondenswasser gebildet werden kann. Gebäudewände weisen jedoch regelmäßig Unebenheiten auf, so daß sich, trifft man keine weiteren Vorkehrungen, solche Luftzwischenräume zwischen dar Gebäudewand und den plan ausgebildeten Wärmedämm-Formteilen nicht vermeiden lassen. Daher wird seither so vorgegangen, daß man vor der Befestigung der Wärmedämm-Formteile auf die Wand eine Spachtelmasse aufträgt und so verstreicht, daß sich eine ebene Oberfläche ergibt, an der dann die Wärmedämm-Formteile angebracht werden können.

Es ist ohne weiteres ersichtlich, daß das Auftragen und Verstreichen einer solchen Spachtelmasse arbeitsintensiv ist und somit entsprechende Kosten verursacht. Dabei ist, wird nicht sorgfältig gearbeitet, nicht einmal ganz sichergestellt, daß die erhaltene Oberfläche tatsächlich vollständig plan verläuft. Ein weiterer Nachteil besteht darin, daß die verwendeten Spachtelmassen andere bauphysikalische Eigenschaften, insbesondere einen anderen Temperaturausdehnungskoeffizienten, wie die Gebäudewand und die Wärmedämm-Formteile aufweisen, was im Laufe der Zeit vor allem aufgrund von Temperaturschwankungen zu einer Rißbildung führen kann, die sogar eine Ablösung der Wärmedämm-Formteile bzw. der Spachtelmasse von der Gebäudewand zur Folge haben kann.

Der vorliegenden Erfindung leigt deshalb die Aufgabe zugrunde, bei einer aus Formteilen der eingangs genannten Art gebildeten Gebäudewandverkleidung das Auftreten von die Wärmedämmung ungünstig beeinflussenden und das Entstehen von Kondenswasser begünstigenden Luftzwischenräumen sicher zu vermeiden und dabei ein schnelles Arbeiten zu ermöglichen, ohne daß die Gefahr einer Rißbildung oder einer sonstigen bauphysikalisch bedingten, das Langzeitverhalten der Wärmedämmung beeinträchtigenden Erscheinung auftritt.

Diese Aufgabe wird erfindungsgemäß durch die Merkmale des kennzeichnenden Teils des Anspruchs 1 gelöst.

Eine solche Weichschaumstofflage läßt sich elastisch zusammendrücken, so daß sie sich von selbst an die jeweils benachbarte Oberfläche anpaßt und dicht anschmiegt, so daß keinerlei Hohlräume entstehen. Dabei können die Wärmedämm-Formteile angeklebt oder mittels geeigneter Befestigungsmittel wie Nägel od.dgl. durch die Weichschaumstoff-Zwischenschicht hindurch an der Gebäudewand befestigt werden, wodurch man nicht nur einen festen Halt der Formteile sondern gleichzeitig auch eine die Weichschaumstofflage in die Unebenheiten drückende Querkraft erhält. Auf diese Weise kann also das Auftragen und plane Verstreichen der Spachtelmasse entfallen. Ferner ist die Weichschaumstoff-Zwischenschicht in jeder Richtung elastisch nachgiebig, so daß sie allen evtl. auftretenden Abmessungsänderungen folgen kann. Daher können sich auch keine Risse od.dgl. bilden.

Ein zusätzlicher Vorteil besteht darin, daß Weichschaumstoffe eine verhältnismäßig große Wasserdampfdurchlässigkeit aufweisen. Dies begünstigt im Falle eines Gebäudes die Wasserdampfentfernung aus dem Gebäude-Mauerwerk und führt zu einer insgesamt trockeneren Anordnung, was die Wärmedämmung weiter verbessert.

Es liegen also insgesamt einschließlich der Weichschaumstofflage vorgefertigte Wärmedämm-Formteile vor, die man nur noch an der Gebäudewand befestigen muß, um sofort und ohne weitere Maßnahmen einen Vollwärmeschutz zu erhalten. Diese Montage ist witterungsunabhängig.

Es kann zweckmäßigerweise vorgesehen sein, daß die der Weichschaumstofflage entgegengesetzte Seite der Formteile als Sichtseite ausgebildet ist, so daß im Falle einer Gebäudewandverkleidung die einerseits mit der Weichschaumstofflage versehenen und andererseits mit einer Sichtseite ausgebildeten Formteile bei verkleideter Gebäudewand unmittelbar die Wandaussenseite bilden. Auf diese Weise erhält man Wärmedämm-Formteile, die nicht nur einen Vollwärmeschutz ergeben sondern bei einem Gebäude gleichzeitig auch ein äusseres Verputzen od.dgl. und anschließendes Anstreichen, wie es seither üblich ist, entbehrlich machen.

Die Weichschaumstofflage und das übrige jeweilige Formteil sind durch Anschäumen miteinander verbunden. Hierbei kann so vorgegangen werden, daß der Wärmedämmkern zwischen ein die Weichschaumstofflage bildendes Weichschaumstoffelement und die Aussenhaut eingeschäumt ist. Solche Formteile lassen sich sehr leicht in einem Endlosverfahren herstellen, indem man jeweils von einer Vorratsrolle einerseits das Weichschaumstoffelement und andererseits die Aussenhaut zuführt, zwischen die der den Wärmedämmkern ergebende Schaumstoff eingeschäumt wird. Von dem sich ergebenden Strangmaterial brauchen die Formteile nur noch abgelängt zu werden.

Aus der FR-A-1 333 074 ist bereits eine Wandverkleidung mit einer an der Gebäudewand zu befestigende Weichschaumstofflage bekannt. Diese Verkleidung ist jedoch für die Gebäudewand-Innenseite gedacht und für eine Außenverkleidung nicht geeignet. Außerdem handelt es sich nicht um vorgefertigte plattenartige Formteile, zumindest ist der FR-A-1 333 074 diesbezüglich nichts zu entnehmen. Vor allem aber ist kein aus in spröder Form vorliegender Wärmedämmkern vorhanden. Die Weichschaumstofflage bildet nahezu die ganze Wandverkleidung und ist lediglich noch mit einer dünnen flexiblen Lage versehen, die zwar aus Hartschaumstoff bestehen, zur Wärmedämmung jedoch nicht oder kaum beitragen kann.

Ein Ausführungsbeispiel der Erfindung wird nun anhand der Zeichnung erläutert. Es zeigen:
- Fig. 1: eine mit einem Vollwärmeschutz gemäß vorliegender Erfindung versehene Gebäudewand in einer in zwei rechtwinkelig zueinander stehenden Ebene geschnittenen Teildarstellung in Schrägansicht und
- Fig. 2: ein bei der Herstellung des Vollwärmeschutzes gemäß Fig. 1 verwendetes Wärmedämm-Formteil in gesonderter Darstellung im mit Bezug auf die im befestigten Zustand am Gebäude eingenommene Lage horizontal verlaufenden Schnitt.

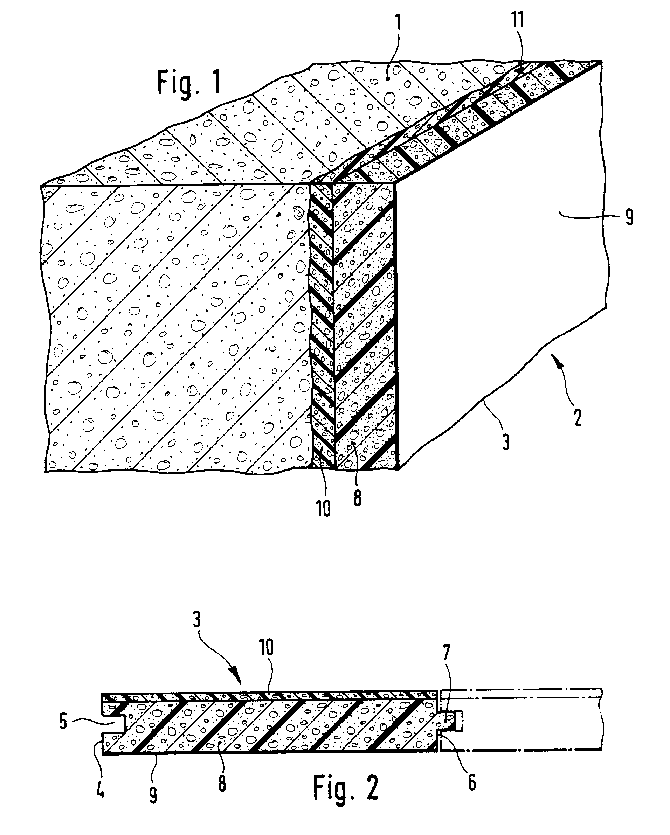

Auf die Gebäudewand 1 ist eine als Vollwärmeschutz dienende Verkleidung 2 aufgebracht, die sich aus rechteckigem Wärmedämm-Formteilen 3 zusammensetzt. Bei den die Gebäudewandverkleidung 2 bildenden Formteilen kann es sich um Platten, Kassetten, Paneele od dgl. handeln. Die Formteile 3 sind beim Ausführungsbeispiel so ausgebildet, daß sie mit dem jeweils seitlich benachbarten Formteil über eine nach Art von Nut und Feder ausgebildete Steckverbindung zusammenfügbar sind. Hierzu weisen sie an einem ihrer in Benutzungslage vertikalen Längsränder, in der Zeichnung am Längsrand 4, eine Nut 5 und am entgegengesetzten Längsrand 6 einen die Feder bildenden Steckvorsprung 7 auf. In Fig. 2 ist ein seitlich benachbartes Formteil strichpunktiert angedeutet. Es versteht sich, daß je nach Größe der Gebäudewand1 die Formteile 3 auch übereinander angeordnet werden.

Die dargestellten Wärmedämm-Formteile 3 weisen einen im wesentlichen nahezu das ganze Formteil ausmachenden Wärmedämmkern 8 aus wärmedämmendem Material auf. Es handelt sich hier zweckmäßigerweise um einen Schaumstoff entsprechender Dichte und Konsistenz, wie er als Wärmedämm-Material üblich ist. So ist beispielsweise in spröder Form vorliegendes Polyurethan bestens geeignet, auch Polystyrol kann in Frage kommen. Die Formteil-Aussenseite wird von einer auf die betreffende Seite des Dämmkerns 8 aufgebrachten Aussenhaut 9 gebildet, die bei verkleideter Gebäudewand 1 unmittelbar die Wandaussenseite und somit die dem Betrachter zugewandte Sichtseite ist. Sie kann den optischen Wünschen des Käufers entsprechend strukturiert und gefärbt sein.

An der bei hergestellter Wandverkleidung der Gebäudewand 1 zugewandten Seite ist das Formteil 3 bzw. sein Dämmkern 8 mit einer fest mit ihm verbundenen Weichschaumstofflage 10 versehen. Die Lage 10 bildet bei hergestellter Wandverkleidung eine Zwischenschicht 11 zwischen der Gebäudewand 1 und dem betreffenden Formteil 3 bzw. dessen Dämmkern 8, die ein dem Weichschaumstoff entsprechendes, schaumgummiähnlich elastisches Verhalten aufweist.

Die Formteile 3 werden also mit ihrer Weichschaumstofflage 10 voran gegen die Gebäudewand 1 gelegt und an dieser in geeigneter Weise, beispielsweise mit Hilfe von Nägeln oder durch Ankleben, befestigt. Dabei wird die Weichschaumstofflage 10 gegen die Gebäudewand 1 gedrückt und schmiegt sich wegen ihrer Nachgiebigkeit an alle Wandunebenheiten an, so daß der Zwischenraum zwischen der Gebäudewand und dem Formteil 3 bzw. dem Dämmkern 8 unabhängig von evtl. Wandunebenheiten überall ausgefüllt ist.

Die Weichschaumstofflage 1o besteht zweckmäßigerweise aus entsprechend weichem Polyurethan.

Bei dem Wärmedämm-Formteil 3 könnte auch die Aussenhaut 9 fehlen oder es könnten sonstige Abänderungen verwirklicht sein, die die geschilderte Wirkung der Zwischenschicht 11 nicht beeinträchtigen. Prinzipiell kommt es in Zusammenhang mit der vorliegenden Erfindung in erster Linie auf das Vorhandensein der Zwischenschicht 11 aus Weichschaumstoff an, ansonsten ist die Ausbildung des Formteils sekundär. Das dargestellte Formteil 3 weist allerdings den Vorzug auf, daß man mit ihm ohne sonstige Arbeiten gleichzeitig einen Vollwärmeschutz für das Gebäude und eine Gebäude-Sichtseite erhält.

Die Weichschaumstofflage 10 und das übrige Formteil 3, d.h. beim Ausführungsbeispiel der Dämmkern 8, sind durch Anschäumen miteinander verbunden. Sie könnten jedoch auch aneinander angeklebt oder sonstwie miteinander verbunden sein. Im Falle eines Anschäumens kann beim Ausführungsbeispiel die Herstellung so erfolgen, daß man in einem Endlosverfahren zwischen eine von einer Vorratsrolle kommende, die Weichschaumstofflage bildende Weichschaumstoffmatte und die ebenfalls von einer Vorratsrolle kommende Aussenhaut den Dämmkern 8 einschäumt, wonach man die Wärmedämm-Formteile in der gewünschten Länge ablängen kann.

Die Weichschaumstofflage 10 deckt das ganze Formteil 3 ab, so daß bei aneinandergefügten Formteilen keine Fugen entstehen.

Wie bereits einleitend erläutert, wird auf die beschriebene Weise ein Vollwärmeschutz erzielt. Aufgrund der sich dicht anschmiegenden Zwischenschicht 11 ergeben sich keine Lufträume, durch die Aussenluft zirkulieren könnte. Damit zusammenhängend wird das Auftreten von Kondenswasser innerhalb der Wandverkleidung vermieden, so daß insgesamt ein sehr guter Vollwärmeschutz vorliegt, wobei die Zwischenschicht 11 gleichzeitig sozusagen eine schwimmende Lagerung für die Formteile 3 darstellt, so daß aufgrund unterschiedlicher Temperaturausdehnungen der verschiedenen Materialien od.dgl. auch keine Risse oder sonstige Beschädigungen auftreten können. Ferner erhält man eine schnelle Montage und ist insbesondere bei der dargestellten Ausführungsform mit der bereits am Formteil befindlichen Zwischenschicht, oder wenn die Zwischenschicht von einer gesonderten Schaumstoffmatte gebildet wird, witterungsunabhängig.

## Patentansprüche

1. Vorgefertigtes plattenartiges Formteil (3) mit wärmedämmenden Eigenschaften zum Verkleiden einer Gebäudewand-Außenseite, wobei das Formteil (3) im wesentlichen von einem Wärmedämmkern (8) aus in spröder Form vorliegendem Schaumstoff gebildet wird, dadurch gekennzeichnet, daß der Wärmedämmkern (8) an seiner bei hergestellter Wandverkleidung der Gebäudewand (1) zugewandten Seite mit einer elastisch nachgiebigen, sich dicht an die Gebäudewand (1) anschmiegenden Weichschaumstofflage (10) versehen ist, wobei die Weichschaumstofflage (10) und die den Wärmedämmkern (8) bildende Formteilpartie durch Anschäumen miteinander verbunden sind.

2. Formteil nach Anspruch 1, dadurch gekennzeichnet, daß die der Weichschaumstofflage (10) entgegengesetzte Seite des Formteils (3) als Sichtseite ausgebildet ist.

3. Formteil nach Anspruch 1 oder 2, dadurch gekennzeichnet, daß der Wärmedämmkern (8) zwischen ein die Weichschaumstofflage (10) bildendes Weichschaumstoffelement und eine die Sichtseite bildende Außenhaut (9) eingeschäumt ist.

## Claims

1. Prefabricated panel-like moulding (3) with thermal-insulation properties, for cladding a building outside wall, wherein the moulding (3) is formed essentially of a thermally-insulating core (8) of foam existing in brittle form, characterized in that the thermally-insulating core (8) is provided, on its side which faces the building wall (1) when the latter has been clad, with a flexible, resilient flexible foam layer (10) which moulds tightly to the building wall (1), while the flexible foam layer (10) and the moulding section forming the thermally-insulating core (8) are joined together by foaming.

2. Moulding according to claim 1, characterized in that the side of the moulding (3) opposite the flexible foam layer (10) is designed as the visible side.

3. Moulding according to claim 1 or 2, characterized in that the thermally-insulating core (8) is foamed in between a flexible foam element forming the flexible foam layer (10) and an outer skin (9) forming the visible side.

## Revendications

1. Pièce façonnée (3) préfabriquée, du type plaque, possédant des propriétés isolantes et destinée au revêtement de la face extérieure d'un mur de bâtiment, la pièce façonnée (3) est essentiellement constituée d'un noyau isolant (8) en mousse se présentant sous une forme cassante, caractérisée en ce que le noyau isolant (8), sur son côté orienté en direction du mur de bâtiment (1), lorsque le revêtement mural est fabriqué, est pourvu d'une couche de mousse souple (10) élastique et flexible, s'adaptant de façon jointive sur le mur de bâtiment (1), la couche de mousse souple (10) et la partie de pièce façonnée constituant le noyau isolant (8) étant reliées par moussage.

2. Pièce façonnée selon la revendication 1, caractérisée en ce que la face de la pièce façonnée (3) qui est opposée à la couche de mousse souple (10) est conformée en face apparente.

3. Pièce façonnée selon la revendication 1 ou 2, caractérisée en ce que le noyau isolant (8) est moussé entre un élément en mousse souple formant la couche de mousse souple (10) et une peau extérieure (9) constituant la face apparente.
